# EUROPEAN PATENT SPECIFICATION

(11) **EP 4 033 909 B1**
(45) Date of publication and mention of the grant of the patent: **05.11.2025**
(21) Application number: 20817208.0
(22) Date of filing: 25.09.2020
(51) Int. Cl.: A23D 9/007, A23D 9/02, A23L 27/10

(54) **METHOD AND INSTALLATION FOR FLAVORING OF VEGETABLE OILS/OLIVE OILS BY UTILIZATION OF NATURAL VOLATILE ORGANIC AROMA COMPOUNDS EMITTED BY VEGETABLE PRODUCTS**
VERFAHREN UND ANLAGE ZUM AROMATISIEREN VON PFLANZENÖLEN/OLIVENÖLEN DURCH VERWENDUNG VON NATÜRLICHEN FLÜCHTIGEN ORGANISCHEN AROMASTOFFEN, DIE VON PFLANZLICHEN PRODUKTEN ABGEGEBEN WERDEN
PROCÉDÉ ET INSTALLATION POUR AROMATISER DES HUILES VÉGÉTALES/HUILES D'OLIVE PAR L'UTILISATION DE COMPOSÉS AROMATIQUES ORGANIQUES VOLATILS NATURELS ÉMIS PAR DES PRODUITS VÉGÉTAUX

(30) Priority: 26.09.2019 BG 11300319
(43) Date of publication of application: 03.08.2022
(73) Proprietor: Premium Truffle Foods Ltd., 1113 Sofia (BG)
(72) Inventor: KLINCHEV, Ognyan Georgiev, Sofia 1113 (BG); HADZHIIVANOVA, Veselina Nikolova, Sofia 1404 (BG); ANGELOV, Chavdar Parvanov, Sofia 1618 (BG); DILINSKI, Ivaylo Petkov, Sofia 1220 (BG)
(74) Representative: Varbanov, Julian Ivanov
(86) International application number: PCT/BG2020/000034
(87) International publication number: WO 2021/056085

(56) References cited:
- EP-A1- 0 396 481
- US-A- 5 073 398
- US-A1- 2018 177 206

## Description

### Technical field of the invention

The invention relates to food industry field and in particular to a method, technology and installation for flavoring of natural vegetable oils / olive oils for the needs of the gourmet industry. These oils / olive oils are used in the creation of high quality gourmet foods. The flavoring according to the invention is carried out with the natural volatile aroma organic compounds contained in some high-quality vegetable products with an exclusive culinary positioning. A typical example are the different truffle types and other exotic mushrooms.

### State of the art

In pursuit to meet the expectations of the gourmet industry, so far mainly artificially flavored oils / olive oils are offered. This is achieved through the use of two or three artificially synthesized chemical compounds that resemble a modest part of the rich aroma compounds package inherent in truffles, consisting of 111 already identified natural aroma compounds. So far, through the use of synthetic flavors, simple and incomplete chemical mixtures have been created, disguised and later launched to consumers as gourmet delicacies. There are also some production technologies based on older artisan practices, limited to an attempt to "infuse" truffle flavor by mixing / soaking truffle mass with oil / olive oil, subject to flavoring. This approach is unproductive due to the truffle matter composition, which contains:
- 73% water by weight;
- proteins;
- minerals (potassium, calcium, magnesium);
- highly volatile aroma organic compounds;
- others.
Methods and systems to impart a natural flavour from high volatile aroma compounds to an oil via a gas stream is already disclosed in EP0396481, US5073398 and US2018/177206.

As can be seen, the truffle's matter does not contain oils - its aroma compounds are highly volatile organic compounds that quickly pass into gas phase. This makes the soaking process unproductive, like other similar technologies described and based on the "infusion" concept. Therefore the above truffle properties make infusion ineffective as a way for oils / olive oils flavoring also in the cases where truffle is pressed and its extract is put in oils / olive oils. However, a number of companies cite it as a production method for naturally truffle flavored oils. This infusion method is usually indicated to customers by placing a visible piece of truffle in the oil / olive oil as an apparent source of flavor, which masks the actual flavoring with synthetic flavors.

In conclusion, as a result of the specific oil-free truffle composition the process and the accompanying technologies for "infusion" of truffle mass in oil / olive oil with the aim so to infuse truffle flavor, are inefficient.

### Technical essence of the invention

The problem solved by the invention is to provide an effective method for natural flavoring of oils / olive oils with vegetable products with leading positions in culinary and in particular in the gourmet culinary, such as truffles and other types of mushrooms emitting highly volatile aroma organic compounds.

The invention relates to a technology that makes it possible to transfer and to permanently absorb these natural highly volatile aroma organic compounds by vegetable oils / olive oils.

The method, subject to the invention, overcomes the disadvantages inherent in the "infusion" methods mainly used currently for flavoring oils / olive oils. It creates an opportunity for utilization especially of these highly volatile aroma organic compounds, which are inevitably and intensively released in the storage process of the products within the first two / three days after truffles and mushrooms harvesting. Furthermore the method achieves a transfer of the complete diverse bouquet of highly volatile aromas, instead of relying on only one, two, or three dominant ones, as it is the case with flavoring with synthetic aromas.

In this way an effect of extremely rich in nuances and impressive as sensation flavoring of oils / olive oils through over 110 additional new aroma components is achieved.

During treatment process an environmental temperature of up to 15° C is secured, which is very favorable for the preservation of the own aroma components of the vegetable oils / olive oils, without negatively affecting their overall quality.

Furthermore the method provides a treatment that takes place in an oxygen-free environment - the oxygen is separated from the aroma gases prior to treatment process. This provides sufficient inert environment preventing negative oxidation effects on vegetable oils.

Taking into account the main specifics of the most common elite positioned gourmet products as a source of desired flavors in vegetable oils / olive oils, as well as the modern gourmet trends in the food industry, the expediency of a technology for utilization namely of gaseous, highly volatile aroma organic compounds for the flavoring of vegetable oils / olive oils, is obvious. An additional reason for the development and the application of such technology is the fact that these highly volatile aromas are inevitably emitted by the products during storage process prior shipment to consumers. The same process of aroma emission also occurs during storage prior further industrial processing intended for mass production of foods containing truffles (sausages, chips etc.)

The flavoring method involves extraction of the highly volatile aroma compounds from the storage chambers of the aroma emitting products and transfer of their complete volume into the vegetable oils / olive oils subject to flavoring, whereby all aroma molecules are evenly absorbed by the fluid, resulting in stable, unified and homogeneously connected system.

For the purpose of the absorption of the natural aroma organic compounds by the oils / olive oils, it is necessary to implement the most intensive contact possible between the molecules of the two physical states - aroma's gaseous state and oil's liquid state. This is achieved through a process of "bubbling", which takes place under conditions of regulated liquid and gaseous phases being parts of the process.
1 / The oil temperature is controlled, as it shouldn't exceed +15° C. This is achieved by heat exchange with the aromas gaseous phase, which, extracted from the storage cooling chamber for flavor emitting products, usually doesn't exceed +5° C.
2 / The aroma gases emitted in the storage chambers are purified from oxygen by filtration process. It separates the chemical element oxygen consisting of only two atoms in its molecule, from the volatile organic compounds containing many atoms and atomic groups in their molecules, and therefore with many times higher molecular weight and size, which allow their effective separation from the oxygen by filtration.
3 / The pressure at which the oxygen-free aroma gases are injected into the bubbling chamber is controlled according to the viscosity parameters of the treated oil at the corresponding process temperature. The aim is to form a gas stream sufficiently minimized as a micro volume passing at a minimum speed through the volume of the treated fluid.
4 / There is a system of separation diaphragms installed and controlled with the aim to counteract the propensity of the aroma gases microvolume bubbles to integrate and to grow while passing through fluid.

Depending on the aroma gases concentration in the storage chamber, the treatment under these controlled conditions lasts from min. 20 h up to max. 24 h.

Within this time cycle a process of intensive flavoring is carried out, satisfying the criteria and the expectations of the gourmet industry and its experts.

An entirely natural product is created - naturally flavored vegetable oil / olive oil with an extremely rich and intense package of aroma nuances typical for the products emitting them, such as truffles and others. In addition to the imported flavors (111 flavors) this newly created naturally flavored product also completely preserves the range of the own flavors of the oil / olive oil (94 flavors), positioning it in the top class of the gourmet industry.

### Preferred embodiment

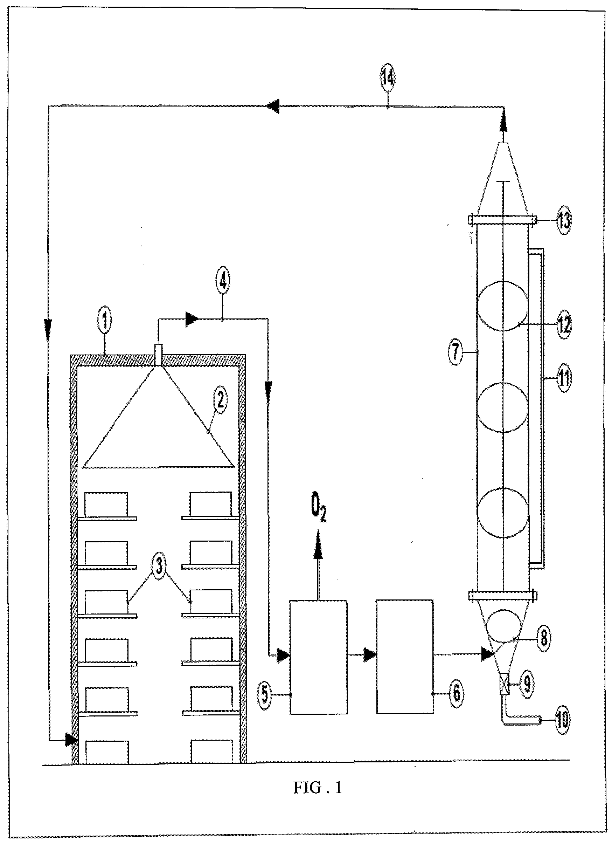

A sample of the invention embodiment is illustrated by the enclosed Figure 1 and the accompanying explanation.

The enclosed Figure 1 shows the installation for bubbling (item 7.) of liquid oils / olive oils with natural aroma gases with a one cycle capacity of 50 1 fluid and a height of the treated oil column of 2000 mm, as well as the following items:
1) Cooling chamber for temporary storage of products emitting volatile aroma gases.
2) Suction hood with fine dust filter.
3) Crates with aroma emitting products.
4) Suction air duct.
5) Separator for separating oxygen from aroma gases.
6) Food grade oil-free compressor with adjustable outlet pressure and flow.
7) Bubbling device.
8) Injector for supplying aroma gases to the bubbling device.
9) Fast connection shut-off valve for feeding oil for processing and processed product discharge.
10) Fast connection port for food grade discharging pump.
11) Level sight glass for oil level monitoring.
12) Separation diaphragms.
13) Oil filter at bubbling device exhaust.
14) Air duct for returning treated oxygen-free gases with residual aromas content to chamber

In the cooling chamber for products storage (Pos. 1.) - pre-washed truffles placed in crates (Pos. 3.) - there is a suction hood for aroma gases (Pos. 2.), equipped with a filter catching fine dust particles and freely permeable for aroma gases. The gases are sucked in through the air duct (Pos. 4.) by a food grade oil-free air compressor (Pos. 6.). Prior entering the compressor the gas mixture of air and volatile aroma gases drawn from the chamber pass through a separator (Pos. 5.) - a device for separating oxygen from air-gas mixture. Thus, the aromatized oxygen-free gases enter an injector (Pos. 8.) for their introduction into the bubbling device (Pos. 7.). The inlet pressure is in the range of 0.2 - 0.5 technical atmospheres and the flow is in the range of 25-50 1 / min. The bubbling device is now filled up with olive oil via mobile fast connection food grade pump (Pos. 10.) and a shut-off valve (Pos. 9.). In this particular case the 50-liter volume provides an oil column with a height of 2000 mm and the filling is monitored by level sight glass (Pos. 11.).

The aroma gases are bubbling and moving upwards from the injector and the molecules of the whole package of 111 aroma organic compounds meet the molecules of the treated olive oil resulting in a process of absorption at molecular level. It's therefore essential that the injection of the aroma gases is carried out in form of the finest possible structure of micro air bubbles in order to provide the largest contact surface. Their propensity to integrate in the course of their movement in vertical direction is neutralized by passing through separation diaphragms (Pos. 12.), the structure of which is selected according to the viscosity and the temperature of the treated olive oil. Provided the product storage chambers maintain a temperature of about 5° C, after a short initial treatment the olive oil achieves a temperature of ≤15° C - optimal environment, both for the absorption process of the introduced aromas and for the preservation of the olive oil quality.

Prior leaving the the top end of the bubbling device the gases pass through a filter for catching olive oil microparticles (Pos. 13.) which accompany the process of gas escaping to the oil surface layer. Thus, the defatted gases are directed via a return gas connection (Pos. 14.) to the storage chamber. This is appropriate due to the residual aromas present in them, as well as due to the fact that they are purified from oxygen. This supports and optimizes the process of storing truffles in the chamber.

By this method the highly volatile aroma gases, inevitably and most intensively emitted by truffles during the first 1-3 days after their harvesting, are absorbed.

The truffles themselves stored during the period of accumulation of the quantities necessary for dispatch aren't treated in any additional way for the purposes of this method, nor do they suffer any additional negative effects. On the contrary, they are stored in an environment with reduced oxygen content, which preserves them better and for longer.

The olive oil flavored with truffle aroma by this technology of bubbling in an oxygen-free environment is a product with exceptional aroma properties, valuable and sought after in the haute cuisine world. It is a natural product containing huge variety of truffle flavors in their entirety. Thus, the identified 111 volatile truffle aroma organic compounds meet the 94 olive oil aroma compounds. The variety of these over 200 aroma components of the final product is unique for any of the truffle types (white, black, red), and it is impossible to replace it with imitation products flavored with 2-3 synthetic flavors. A unique product is created, flavored with natural flavors from natural products of exotic origin, highly valued in the world of gourmet culinary.

### High quality naturally flavored vegetable oils / olive oils

Through the developed bubbling method high quality naturally flavored vegetable oils / olive oils are created by flavoring with natural highly volatile aroma organic compounds derived from delicacies highly positioned in the elite culinary such as truffles (white, black, red), other rare mushroom species and other vegetable products.

### 2 / Naturally flavored liquid food products

By the same bubbling technology and by using suitable volatile vegetable flavors a wider range of flavored liquid foods such as juices and others can be created.

### 3 / Naturally flavored spring, mineral and table drinking water

The bubbling method by using suitable volatile vegetable aromas is also applicable for aromatization of spring, mineral and table drinking water.

### 4 / Method for flavoring of natural vegetable oils / olive oils by bubbling with volatile aroma gases, inevitably emitted during storage of natural products in static cooling chambers.

The accumulation of the necessary natural vegetable products in larger or industrial quantities, especially when they are wildly growing such as truffles, takes a period of 1-3 days. This is the first part of the 5-days period of the most intense emission of their highly volatile aromas.

The highly volatile aroma gases inevitably emitted by the products in the storage spaces are very successfully utilized for flavoring of vegetable oils / olive oils by the bubbling technology illustrated by the installation on Fig. 1.

The bubbling achieves the necessary internal volume contact at molecular level between aroma compounds and liquids, whereby aromas are effectively absorbed by the oil / olive oil. The treatment process is consistent with the specific physical properties of the treated oil / olive oil (i.e. mainly its viscosity at a given temperature) and the aroma gases concentration degree in the gas-aroma mixture emitted by the products in the storage chambers. The concentration of the aroma gases in turn is a function of the natural products quantity stored in the chamber.

After the air-aroma mixture is extracted from the cooling chamber the gas stream is cleared of oxygen content by filtration, after which the bubbling process is carried out, so the treatment is carried out in an oxygen-free environment. This protects the treated oil / olive oil from oxidation and thus it fully retains the own aromas as well as all other quality properties. Through the oil / olive oil these gourmet flavors are retained and are becoming available all year round, although the products they are derived from are only available on the market 3-4 months a year, as it is the case with the white truffle "Tuber Magnatum Pico".

### 5 / Method for flavoring liquid food products and spring, mineral and table drinking water by bubbling with volatile aroma gases.

By applying the bubbling method, described in detail in Point 4., liquid food products and spring, mineral and table drinking water can also be flavored with volatile aroma gases emitted by natural vegetable products.

### 6 / Method for flavoring of natural vegetable oils / olive oils by bubbling with volatile aroma gases, inevitably emitted during storage of natural products, by means of mobile bubbling installations installed in vehicles for their transportation.

The first two days following the accumulation of the necessary quantities of natural vegetable products are often used to carry out the transport process for delivery to consumers. They represent the second part of the in total 5-days period of the most intensive emission of their highly volatile aromas. It is therefore appropriate to use this time period for utilization of their aroma gases.

This is possible to be achieved by installing the bubbling installation shown on Fig. 1 in vehicles.

The transportation process from the collection site of these aroma products to the consumers located in various usually more distant countries (1500-2500 km), takes a period of 1-2 days. The vehicles are usually large cargo vans with a build-in cooling storage chamber. It is the natural place where aroma gases are emitted and where they can be extracted from. The cooling chambers volume usually allow a load of one ton of natural vegetable products, whose aromas can be utilized. The overall volume of the cargo vans in turn allows the installation of a build-in bubbling installation (Fig. 1.) with a capacity of the oil / olive oil subject to treatment not less than 50 1. A transportation time of 18 up to 36 hours is completely sufficient for quality treatment of one batch of bubbled fluid.

A batch of olive oil subject to flavoring is loaded at vehicle departure point and is then discharged from the bubbling system on arrival at the destination point, where the already flavored olive oil is going to be packaged.

This mobile structure, which allows the utilization of the inevitably and intensely emitted aroma organic compounds during the transport process, is an appropriate and completely sound technical solution.

## Claims

1. Method for natural flavoring of oils / olive oils with highly volatile aroma organic compounds, comprising the extraction of highly volatile aroma organic compounds as a gas stream and their transfer in a full volume into vegetable oils / olive oils subject to flavoring, **characterized in that** their transfer in full volume is carried out by bubbling of the highly volatile aroma organic compounds in gaseous state in oil / olive oil in liquid state under conditions of controlled liquid and gas phase, wherein the conditions of the regulated liquid and gas phase include:
- oil temperature not higher than 15° C;
- pressure at which the gases are introduced for bubbling to form a gas flow sufficiently minimized as a micro-volume passing at a minimum speed through the volume of the liquid phase;
- counteracting the propensity of the microvolume aroma gas bubbles formed during bubbling to integrate and to grow as they pass through liquid phase by adjusting the separation diaphragms system.

2. Method for natural flavoring of oils / olive oils with highly volatile aroma organic compounds according to Claim 1, **characterized in that** the bubbling is carried out in an oxygen-free environment.

3. Method for natural flavoring of oils / olive oils with highly volatile aroma organic compounds according to Claims 1 or 2, **characterized in that** after extraction of the highly volatile aroma organic compounds the gas stream is purified from oxygen content by filtration.

4. Device for realizing the flavoring method according to Claim 1, **characterized in that** it comprises a cooling chamber for temporary storage of products emitting volatile aroma gases (1) supplied with in parallel stacked crates with aroma-emitting products (3) equipped with a suction hood with fine dust particles filter at the top part (2) connected by a suction air duct (4) to a separator (5) for separating the oxygen from the aroma gases connected through an oil-free compressor with adjustable outlet pressure and flow (6) to the bubbling device (7) provided at the bottom end with a connection port for food grade feeding/discharge pump (10), fast connection shut-off valve for oil feeding and treated product draining (9) and an injector for supplying aroma gases to the bubbling device (8), wherein the bubbling device is further provided with oil level monitoring sight glass (11), separation diaphragms installed verticaly and in parallel to each other (12), oil filter (13) on the top and above it with a return airduct (14) to the cooling chamber.

5. Device according to the preceding claim, **characterized in that** it is provided on a mobile platform.

## Patentansprüche

1. **Verfahren zur natürlichen Aromatisierung von Ölen / Olivenölen mit hochflüchtigen aromatischen organischen Verbindungen,** umfassend die Extraktion hochflüchtiger aromatischer organischer Verbindungen als Gasstrom und deren Übertragung in vollem Umfang in pflanzliche Öle / Olivenöle, die der Aromatisierung unterliegen, **dadurch gekennzeichnet, dass** deren Übertragung in vollem Umfang durch Begasung der hochflüchtigen aromatischen organischen Verbindungen im gasförmigen Zustand in Öl / Olivenöl im flüssigen Zustand unter Bedingungen einer kontrollierten flüssigen und gasförmigen Phase durchgeführt wird, wobei die Bedingungen der geregelten flüssigen und gasförmigen Phase umfassen:
• eine Öltemperatur von nicht mehr als 15 °C;
• einen Druck, bei dem die Gase zur Begasung eingeführt werden, um einen Gasstrom zu bilden, der ausreichend minimiert ist als Mikrovolumen, das mit einer Mindestgeschwindigkeit durch das Volumen der flüssigen Phase hindurchtritt;
• das Entgegenwirken der Neigung der während der Begasung gebildeten Mikrovolumen-Aromagasblasen, sich zu vereinigen und zu wachsen, wenn sie die flüssige Phase durchlaufen, durch Einstellen des Systems von Trennmembranen.

2. **Verfahren zur natürlichen Aromatisierung von Ölen / Olivenölen mit hochflüchtigen aromatischen organischen Verbindungen nach Anspruch 1, dadurch gekennzeichnet, dass** die Begasung in einer sauerstofffreien Umgebung durchgeführt wird.

3. **Verfahren zur natürlichen Aromatisierung von Ölen / Olivenölen mit hochflüchtigen aromatischen organischen Verbindungen nach Anspruch 1 oder 2, dadurch gekennzeichnet, dass** nach der Extraktion der hochflüchtigen aromatischen organischen Verbindungen der Gasstrom durch Filtration vom Sauerstoffgehalt befreit wird.

4. **Vorrichtung zur Durchführung des Aromatisierungsverfahrens nach Anspruch 1, dadurch gekennzeichnet, dass** sie eine Kühlkammer zur vorübergehenden Lagerung von Produkten umfasst, die flüchtige Aromagase emittieren (1), die in parallel gestapelten Kisten mit aromatisch emittierenden Produkten (3) bereitgestellt sind, ausgestattet mit einer Absaughaube mit Feinstaubfilter im oberen Teil (2), verbunden durch einen Absaugluftkanal (4) mit einem Separator (5) zur Abtrennung des Sauerstoffs von den Aromagasen, der über einen ölfreien Kompressor mit einstellbarem Ausgangsdruck und - fluss (6) mit der Begasungsvorrichtung (7) verbunden ist, die am unteren Ende mit einem Anschluss für eine lebensmitteltaugliche Förder-/Entleerungspumpe (10), einem Schnellkupplungsabsperrventil für die Ölzufuhr und das Entleeren des behandelten Produkts (9) und einem Injektor zur Zufuhr von Aromagasen in die Begasungsvorrichtung (8) versehen ist, wobei die Begasungsvorrichtung weiterhin mit einem Ölstandsanzeigeglas (11), vertikal und parallel zueinander angeordneten Trennmembranen (12), einem Ölfilter (13) an der Oberseite und darüber mit einem Rückluftkanal (14) zur Kühlkammer ausgestattet ist.

5. **Vorrichtung nach dem vorhergehenden Anspruch, dadurch gekennzeichnet, dass** sie auf einer mobilen Plattform vorgesehen ist.

## Revendications

1. **Procédé d'aromatisation naturelle des huiles** / **huiles d'olive avec des composés organiques aromatiques hautement volatils,** comprenant l'extraction de composés organiques aromatiques hautement volatils sous forme de flux gazeux et leur transfert en totalité dans des huiles végétales / huiles d'olive à aromatiser, **caractérisé en ce que** leur transfert en totalité est réalisé par barbotage des composés organiques aromatiques hautement volatils à l'état gazeux dans de l'huile / huile d'olive à l'état liquide, dans des conditions de phase liquide et gazeuse contrôlée, les conditions de la phase liquide et gazeuse régulée comprenant :
• une température de l'huile ne dépassant pas 15 °C ;
• une pression à laquelle les gaz sont introduits pour le barbotage de manière à former un flux gazeux suffisamment réduit en micro-volume passant à une vitesse minimale à travers le volume de la phase liquide ;
• la contre-réaction à la tendance des micro-bulles de gaz aromatiques formées lors du barbotage à s'intégrer et à croître lorsqu'elles traversent la phase liquide, par réglage du système de diaphragmes de séparation.

2. **Procédé d'aromatisation naturelle des huiles / huiles d'olive avec des composés organiques aromatiques hautement volatils selon la revendication 1, caractérisé en ce que** le barbotage est effectué dans un environnement exempt d'oxygène.

3. **Procédé d'aromatisation naturelle des huiles / huiles d'olive avec des composés organiques aromatiques hautement volatils selon les revendications 1 ou 2, caractérisé en ce qu'**après l'extraction des composés organiques aromatiques hautement volatils, le flux gazeux est purifié de sa teneur en oxygène par filtration.

4. **Dispositif pour la réalisation du procédé d'aromatisation selon la revendication 1, caractérisé en ce qu'**il comprend une chambre de refroidissement pour le stockage temporaire de produits émettant des gaz aromatiques volatils (1) disposés dans des caisses empilées parallèlement contenant des produits émetteurs d'arômes (3), équipé d'une hotte d'aspiration avec filtre à particules fines dans la partie supérieure (2), reliée par un conduit d'aspiration d'air (4) à un séparateur (5) destiné à séparer l'oxygène des gaz aromatiques, relié par un compresseur sans huile à pression et débit de sortie réglables (6) à l'appareil de barbotage (7), lequel est muni à son extrémité inférieure d'un orifice de connexion pour une pompe alimentaire de remplissage/vidange (10), d'une vanne d'arrêt à connexion rapide pour l'alimentation en huile et la vidange du produit traité (9), ainsi que d'un injecteur destiné à introduire les gaz aromatiques dans l'appareil de barbotage (8), l'appareil de barbotage étant en outre pourvu d'un voyant de niveau d'huile (11), de diaphragmes de séparation disposés verticalement et parallèlement les uns aux autres (12), d'un filtre à huile (13) sur la partie supérieure et, au-dessus, d'un conduit de retour d'air (14) vers la chambre de refroidissement.

5. **Dispositif selon la revendication précédente, caractérisé en ce qu'**il est monté sur une plate-forme mobile.
